(19) Europäisches Patentamt / European Patent Office / Office européen des brevets

(11) **EP 2 648 162 A2**

(12) **EUROPEAN PATENT APPLICATION**
published in accordance with Art. 153(4) EPC

(43) Date of publication:
**09.10.2013 Bulletin 2013/41**

(51) Int Cl.:
**G06T 15/00** *(2011.01)* **H04N 13/00** *(2006.01)*

(21) Application number: **11845396.8**

(22) Date of filing: **30.11.2011**

(86) International application number:
**PCT/KR2011/009221**

(87) International publication number:
**WO 2012/074294 (07.06.2012 Gazette 2012/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 US 417987 P**
**17.11.2011 KR 20110120489**

(71) Applicant: **Samsung Electronics Co., Ltd Gyeonggi-do 443-742 (KR)**

(72) Inventors:
• **LIMONOV, Alexander**
**Suwon-si**
**Gyeonggi-do 443-470 (KR)**

• **LEE, Jin-sung**
**Suwon-si**
**Gyeonggi-do 443-733 (KR)**
• **CHANG, Ju-yong**
**Seoul 136-110 (KR)**

(74) Representative: **Walaski, Jan Filip et al**
**Venner Shipley LLP**
**200 Aldersgate**
**London**
**EC1A 4HD (GB)**

(54) **IMAGE PROCESSING DEVICE USING AN ENERGY VALUE, AND IMAGE PROCESSING METHOD AND DISPLAY METHOD THEREOF**

(57)    An image processing method is provided. The image processing method includes: shifting an object displayed in a reference image according to depth information; determining a stretching area of a variable size by using an energy value of a background area of the shifted object; and inserting a pixel of the stretching area into a hole area generated by shifting the object to generate a target image. Accordingly, an image quality deterioration phenomenon is prevented.

FIG. 4

EP 2 648 162 A2

**Description**

**CROSS-REFERENCE TO RELATED APPLICATION(S)**

This application claims priority under 35 U.S.C. § 119 from Korean Patent Application No. 10- 2011- 0120489, filed on November 17, 2011, in the Korean Intellectual Property Office, the disclosure of which is incorporated herein by reference in its entirety.

**BACKGROUND**

1. Field

The present general inventive concept generally relates to providing an image processing device using an energy value, and an image processing method and display method thereof, and more particularly, to providing an image processing device which determines a stretching area of a variable size by using an energy value to generate a target image, and an image processing method and display method thereof.

2. Description of the Related Art

Various types of electronic devices have been developed and supplied with the development of electronic technologies. An example of the representative electronic device is a display apparatus such as television (TV). 3-dimensional (3D) display technologies have been recently developed, and thus 3D contents are viewed through a TV or the like in general homes.
A 3D display apparatus is classified into various types of apparatuses such as a glass type display apparatus, a non-glass type display apparatus etc. A plurality of images having disparities are required to view 3D contents in these 3D display apparatuses. In detail, left and right eye images are required.
A 3D display apparatus alternately arranges displays left and right eye images to sequentially display the left and right eye images or divides the left and right eye images into odd and even lines and combines the odd and even lines to display one frame.
As described above, the 3D display apparatus requires a plurality of images such as left and right eye images to display a 3D content. The plurality of images are provided from a content producer. However, since two or more images are to be provided for the same frame, a frequency using bandwidth becomes short.
Therefore, there have appeared a method of providing only one of left and right eye images to a receiving apparatus, generating the other image by using the provided image in the receiving apparatus, and combining the two images to display a 3D image. However, when generating the other image by using the provided image, stripe patterns or a blur phenomenon occurs in some areas of an image.
Accordingly, a method of preventing an image quality deterioration phenomenon and effectively generating a 3D image is required.

**SUMMARY**

Exemplary embodiments address at least the above problems and/or disadvantages and other disadvantages not described above. Also, the exemplary embodiments are not required to overcome the disadvantages described above, and an exemplary embodiment may not overcome any of the problems described above.
The exemplary embodiments provide an image processing device which determines a stretching area of a variable size by using an energy value and generates a target image by using the determined area to prevent an image quality deterioration, and an image processing method and display method thereof.
According to an aspect of the exemplary embodiments, there is provided an image processing method including: shifting an object displayed in a reference image according to depth information; determining a stretching area of a variable size by using an energy value of a background area of the shifted object; and inserting a pixel of the stretching area into a hole area generated by shifting the object to generate a target image.
The determining of the stretching area may include: calculating a size of the hole area; calculating an energy value of the background area by the calculated size from a boundary of the hole area; and calculating an area of the background area having an energy value equal to or lower than a threshold value as the stretching area.
The stretching area may be an area which includes pixels that ranges from the boundary of the hole area to a pixel before a pixel exceeding the threshold value.
The threshold value may be an average energy value calculated by Equation below:

$$\xi = \frac{1}{\lambda}\sum_{i=1}^{\lambda} E_i$$

wherein $\xi$ denotes the average energy value, $\lambda$ denotes a width of the hole area, and $E_i$ denotes an energy value of an $i_{th}$ pixel.

The energy value may be calculated by using one of Equations below:

$$E(x, y) = \left| \frac{\partial}{\partial x} I(x, y) \right| + \left| \frac{\partial}{\partial y} I(x, y) \right|$$

$$E(x, y) = \sqrt{\left( \frac{\partial}{\partial x} I(x, y) \right)^2 + \left( \frac{\partial}{\partial y} I(x, y) \right)^2}$$

$$E(x, y) = \sqrt{\left( \frac{\partial}{\partial x} \left| I(x, y) \right| \right)^2 + \left( \frac{\partial}{\partial y} \left| I(x, y) \right| \right)^2}$$

wherein E(x,y) denotes an energy value of a pixel in coordinate (x,y), and I(x,y) denotes a linear combination of R, G, and B components of the image.

The linear combination I(x,y) may be calculated by Equation below:

$$I(x, y) = \omega_R R(x, y) + \omega_G G(x, y) + \omega_B B(x, y)$$

wherein R(x,y), G(x,y), and B(x,y) denote R, G, and B values of the pixel positioned in the coordinate (x,y), and $\omega_R$, $\omega_G$, and $\omega_B$ respectively denote weights of the R, G, and B values.

The image processing method may further include: smoothing a boundary between an object existing in an original position on the target image and the background area.

According to another aspect of the exemplary embodiments, there is provided a display method including: receiving a reference image and depth information; shifting an object displayed in the reference image according to the depth information; determining a stretching area of a variable size from the background area by using an energy value of the background area of the shifted object; inserting a pixel of the stretching area into a hole area generated by shifting the object to generate a target image; and combining the reference image and the target image to display a 3-dimenstional (3D) image.

The determining of the stretching area may include: calculating a size of the hole area; calculating an energy value of the background area by the calculated size from a boundary of the hole area; and calculating an area of the background area having an energy value equal to or lower than a threshold value as the stretching area. The stretching area may be an area which includes pixels that ranges from the boundary of the hole area to a pixel before a pixel exceeding the threshold value.

According to another aspect of the exemplary embodiments, there is provided an image processing device including: a receiver which receives a reference image and depth information; a controller which determines a stretching area of a variable size by using an energy value of a background of an object displayed in the reference image; and an image processor which shifts the object displayed in the reference image according to the depth information and inserts a pixel of the stretching area into a hole area generated by shifting the object to generate a target image.

The controller may calculate a size of the hole area and calculate an energy value of the background area by the calculated size from a boundary of the hole area to determine an area of the background area having an energy value equal to or lower than a threshold value as the stretching area. The stretching area may be an area which includes pixels that ranges from the boundary of the hole area to a pixel before a pixel exceeding the threshold value.

The threshold value may be an average energy value calculated by Equation below:

$$\xi = \frac{1}{\lambda} \sum_{i=1}^{\lambda} E_i$$

wherein $\xi$ denotes the average energy value, $\lambda$ denotes a width of the hole area, and $E_i$ denotes an energy value of an $i_{th}$ pixel.

The image processor may smooth a boundary between an object existing in an original position on the target image and the background area.

The image processing device may further include a display device which combines the reference image and the target image to display a 3D image.

The image processing device may further include an interface which transmits the reference image and the target image to a display apparatus.

## BRIEF DESCRIPTION OF THE DRAWINGS

The above and/or other aspects will be more apparent by describing certain exemplary embodiments with reference to the accompanying drawings, in which:

FIG. 1 is a block diagram illustrating a structure of an image processing device according to an exemplary embodiment of the present general inventive concept;
FIG. 2 is a view illustrating a process of shifting an object in a reference image;
FIG. 3 is a view illustrating a process of determining a stretching area;
FIG. 4 is a view illustrating a process of generating a target image by using a reference image and depth information;
FIGS. 5 and 6 are block diagrams illustrating various detailed structures of an image processing device;
FIG. 7 is a flowchart illustrating a method of processing a 3-dimensional (3D) image according to an exemplary embodiment of the present general inventive concept;
FIG. 8 is a flowchart illustrating a method of determining a stretching area; and
FIG. 9 is a flowchart illustrating a method of displaying a 3D image according to an exemplary embodiment of the present general inventive concept.

## DETAILED DESCRIPTION OF THE EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

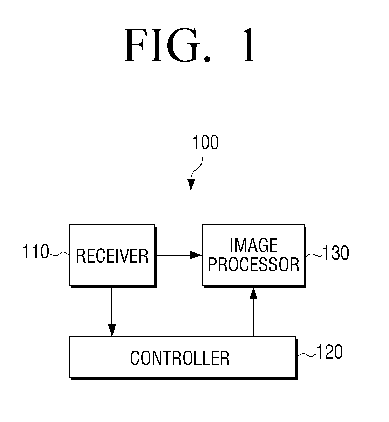

FIG. 1 is a block diagram illustrating a structure of an image processing device according to an exemplary embodiment of the present general inventive concept. Referring to FIG. 1, an image processing device 100 includes a receiver 110, a controller 120, and image processor 130.

The receiver 110 receives a reference image and depth information. The reference image refers to a 2-dimensional (2D) image that is one of left and right eye images.

The depth information refers to information which indicates 3-dimenstional (3D) distance information of an object existing in the reference image. The depth information may be referred to as a depth image or a depth map. A part brightly displayed in the dept image is a part having a high 3D effect, and a part darkly displayed in the dept image is a part having a low 3D effect. Each pixel value of the depth information indicates a depth of a corresponding pixel of the reference image.

The controller 120 determines a stretching area by using an energy value of a background area of the object displayed in the reference image. The stretching area refers to an area which is a standard for determining a pixel value for filling a hole area generated by shifting the object. The energy value refers to a value that indicates characteristics between pixels positioned in the background area and peripheral pixels. A method of determining the stretching area will be described in detail later.

The image processor 130 performs depth image-based rendering which is to shift the object displayed in the reference image by using the depth information. In detail, the image processor 130 calculates a difference of parallax values of objects of the reference image by using the depth information. The image processor 130 moves the object in a left or right direction by the difference between the parallax values to generate an image of a new time point.

The calculation of the difference between the parallax values may be performed by using Equation 1 below:

$$p(x, y) = M(1.0 - \frac{d(x, y)}{256}) \qquad \qquad ...(1)$$

wherein p(x,y) denotes a parallax value of a pixel of position (x,y), d(x,y) denotes a depth value of the pixel of the position (x,y), and M denotes a maximum parallax value. In the present specification, an image generated from a reference image is referred to as a target image. The target image is an image for being mixed with the reference image to form a 3D image. In other words, the target image refers to an image which is formed by expressing a subject at a different time from the reference image. For example, if the reference image is a left eye image, the target image corresponds to a right eye image. If the reference image is a right eye image, the target image corresponds to a left eye image.

The hole area is generated on the target image due to shifting of the object. The image processor 130 fills the hole area with the pixel of the stretching area determined by the controller 120 to generate the target image.

The image processor 130 may smooth a boundary between an object existing in an original position on the target and the background area after generating the target image.

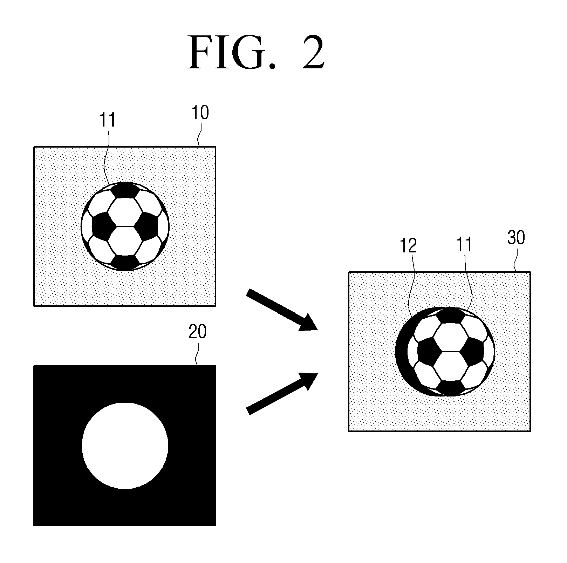

FIG. 2 is a view illustrating a hole area generated when a target image is generated according to a DIBR method. Referring to FIG. 2, when a reference image 10 displaying at least one object 11 and depth information 20 are provided, a position of the object 11 of the reference image 10 is shifted by using the depth information 20 to generate a target image 30. A hole area 12 is generated in a part of the target image 30 in which an original position of the object 11 and a new position do not overlap with each other.

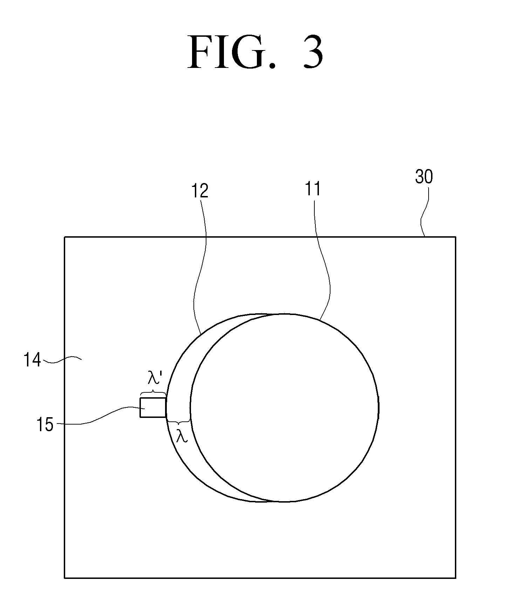

The controller 120 determines the stretching area, which is used to fill the hole area 12, from the back ground area by using a size of the hole area 12. FIG. 3 is a view illustrating a method of determining a stretching area.

Referring to FIG. 3, the hole area generated on the target image has a width in a horizontal direction. The controller 120 checks depth information corresponding to a boundary of the hole area to check whether a background area 14 of the object exists on the left side of the hole area or on the right side of the hole area. The controller 120 calculates energy values of pixels around the boundary of the hole area in the background area. The controller 120 calculates a width λ of the hole area and pixels positioned within a distance of the width λ in the background area. However, only pixels within the same distance are not necessarily selected, and pixels within a range of a distance longer than the width λ may be selected.

The controller 120 calculates energy values of the selected pixels. The energy values refer to characteristic values that are obtained through comparisons between pixels and peripheral pixels. The energy values may be defined as gradients of a color image.

In detail, the energy values may be expressed in Equation below:

$$E(x, y) = \nabla I(x, y) \qquad \qquad ...(2)$$

wherein E(x,y) denotes an energy value of a pixel positioned in (x,y), and I(x,y) denotes a linear combination of R, G, and B components of the reference image.

In more detail, the controller 120 calculates an energy value by using one of Equations 3 through 5 below.

$$E(x, y) = \left| \frac{\partial}{\partial x} I(x, y) \right| + \left| \frac{\partial}{\partial y} I(x, y) \right| \qquad \qquad ...(3)$$

$$E(x, y) = \sqrt{\left(\frac{\partial}{\partial x} I(x, y)\right)^2 + \left(\frac{\partial}{\partial y} I(x, y)\right)^2} \qquad ...(4)$$

$$E(x, y) = \sqrt{\left(\frac{\partial}{\partial x} |I(x, y)|\right)^2 + \left(\frac{\partial}{\partial y} |I(x, y)|\right)^2} \qquad ...(5)$$

The controller 120 calculates I(x,y) by using Equation below:

$$I(x, y) = \omega_R R(x, y) + \omega_G G(x, y) + \omega_B B(x, y) \qquad ...(6)$$

wherein R(x,y), G(x,y), and B(x,y) respectively denote R, G, and B values of the pixel positioned in (x,y), and $\omega_R$, $\omega_G$, and $\omega_B$ denote weights of the R, G, and B values.

The controller 120 calculates energy values of pixels of the background area by using these Equations. After that, the controller 120 sequentially checks the energy values of the pixels to detect pixels having energy values equal to or lower than a threshold value. The controller 120 combines the detected pixels to determine a stretching area 15.

The controller 120 sequentially compares the energy values of the pixels with the threshold value from the boundary of the hole area 12 toward the background area. Therefore, if a pixel exceeding the threshold value is detected, the controller 120 determines an area ranging from a previous pixel to the boundary of the hole area 12 as the stretching area 15.

The controller 120 performs an arithmetic operation in consideration of a difference between three color components. In other words, the controller 120 performs partial differentials of image components as follows.

$$\frac{\partial}{\partial x} I(x, y) = \underset{k=R,G,B}{Q} \left|\frac{\partial}{\partial x} I(x, y)\right|$$

$$\frac{\partial}{\partial x} I(x, y) = \sqrt{\underset{k=R,G,B}{Q} \left(\frac{\partial}{\partial x} I(x, y)\right)^2} \qquad ...(7)$$

$$\frac{\partial}{\partial x} |I(x, y)| = \frac{\underset{k=R,G,B}{Q} I(x, y).\frac{\partial}{\partial x} I(x, y)}{|I(x, y)|}$$

Partial derivatives of the image components are approximated by a Sobel or Scharr operator.

The threshold value may be determined as an average energy value.

In other words, the controller 120 sets an average value of the energy values of the pixels within the distance of the width $\lambda$ from the boundary of the hole area in the background area, to the threshold value. In other words, the threshold value is calculated by Equation below:

$$\xi = \frac{1}{\lambda} \sum_{i=1}^{\lambda} E_i \qquad ...(8)$$

wherein $\xi$ denotes the threshold value, $E_i$ denotes an energy value of an $i_{th}$ pixel.

As a result, a size of the stretching area is variably determined like $1 \leq \lambda' \leq \lambda$.

If the stretching area is determined by the controller 120, the image processor 130 fills the pixels of the stretching area to complete the target image.

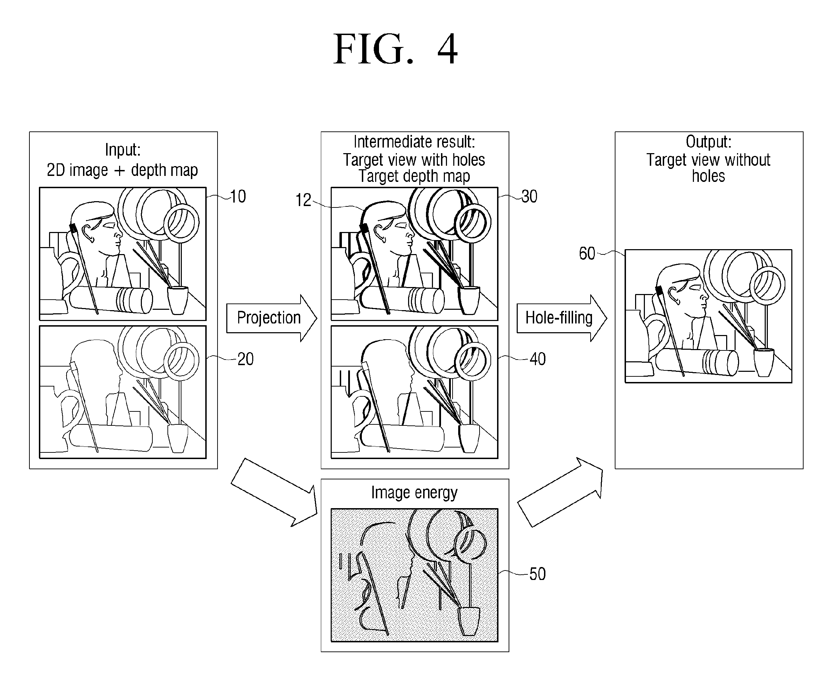

FIG. 4 is a view illustrating a process of generating a target image by using a reference image and depth information.

Referring to FIG. 4, if a reference image 10 and depth information 20 are input, the image processing device 100 performs projection processing to generate a target image 30 including a hole area and a target depth map 40.

The image processing device 100 also generates an energy map 50 of pixels of the reference image 10.

The image processing device 100 determines a stretching area by using the energy map 50 and fills the hole area with pixels of the stretching area to generate a final target image 60.

An image processing method as described above reduces an image quality deterioration phenomenon. In order to secure a higher image quality, an accuracy of depth information is to be high. Therefore, the depth information may be pre-processed and used by using a local maximum filter as in Equation below:

$$\overline{D}(x, y) = \max_{-\frac{s}{2} \le i \le \frac{s}{2}, -\frac{s}{2} \le j \le \frac{s}{2}} \left\{ D(x+i, y+j) \right\} \qquad ...(9)$$

wherein s denotes a window size, D(x,y) denotes a depth of a pixel of x,y coordinates, and $\overline{D}(x, y)$ denotes a pre-processed depth. Since a maximum depth is filtered and used within a window of a particular size as described, sharpness of the depth information becomes higher. A value of the window size s may be an optimal value obtained through repeated tests. For example, 3 or 5 may be uses.

The image processing device of FIG. 1 may be realized as various types of devices. In other words, the image processing device may be realized as a display apparatus such as a TV, a portable phone, a PDA, a PC, a notebook PC, a tablet PC, an e-frame, an e-book, or the like. The image processing device may be realized as a display apparatus such as a set-top box providing a 3D image, other image converting devices, a data player, or the like.

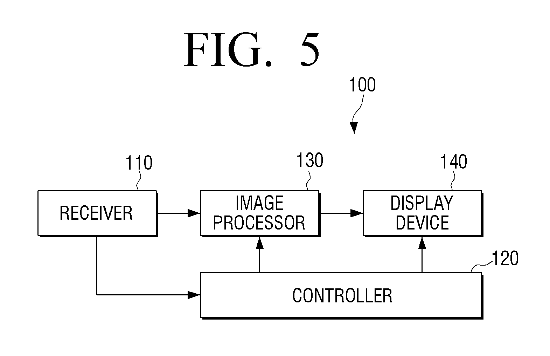

FIG. 5 is a block diagram illustrating a structure of the image processing device 100 realized as a display apparatus. Referring to FIG. 5, the image processing device 100 includes a receiver 110, a controller 120, an image processor 130, and a display device 140.

The display device 140 combines a reference image and a target image to display a 3D image. The display device 140 may display the 3D image according to various methods according to exemplary embodiments.

For example, in the case of shutter glass type, the display device 140 alternately arranges the reference image and the target image to sequentially the reference image and the target image. In this case, each of the reference image and the target image may be copied to be sequentially displayed as at least two or more frames. Before other images are displayed, black frames may be filled and displayed. The image processing device 100 may transmit sync signal, which is to synchronize an eyeglass whenever each frame is displayed, to the eyeglass apparatus.

As another example, in the case of polarized glass type, the display device 140 may divide each of the reference image and the target image into a plurality of lines in a horizontal or vertical direction and combine odd and even lines of each of the reference image and the target image to generate and display at least one frame.

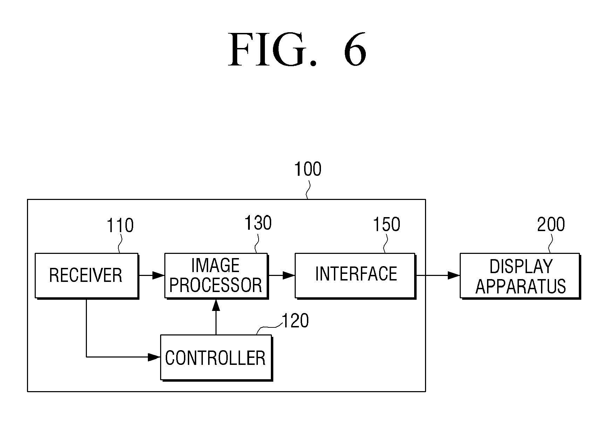

FIG. 6 is a block diagram illustrating a structure of an image processing device connected to a display apparatus. Referring to FIG. 6, the image processing device 100 includes a receiver 110, a controller, an image processor 130, and an interface 150.

The interface 150 transmits a reference image and a target image to a display apparatus 200.

The image processing device 100 is an apparatus separated from the display apparatus 100 in FIG. 6 but may be realized as a chip or module mounted in the display apparatus 200.

The other elements FIGS. 5 and 6 except the display device 140 and the interface 150 are the same as those of FIG. 1, and thus their repeated descriptions will be omitted.

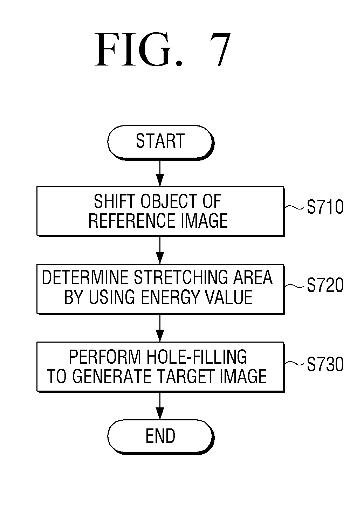

FIG. 7 is a flowchart illustrating an image processing method according to an exemplary embodiment of the present general inventive concept. Referring to FIG. 7, in operation S710, an object included in a reference image is shifted by using depth information to generate a target image. A hole area is included in the target image formed in this operation.

A shifted distance varies according to the depth information. In other words, a disparity of an object having a high depth value is great, and thus a shifted distance of the object becomes longer. A disparity of an object having a low depth value is small, and thus a shifted distance of the object is small.

An energy value of the reference image is calculated separately from shifting of the object. In operation S720, a stretching area is determined from a background area around the hole area by using the calculated energy value.

If the stretching area is determined, a hole-filling filling job for filling the hole area is performed by using pixels of the determined stretching area to complete the target image in operation S730.

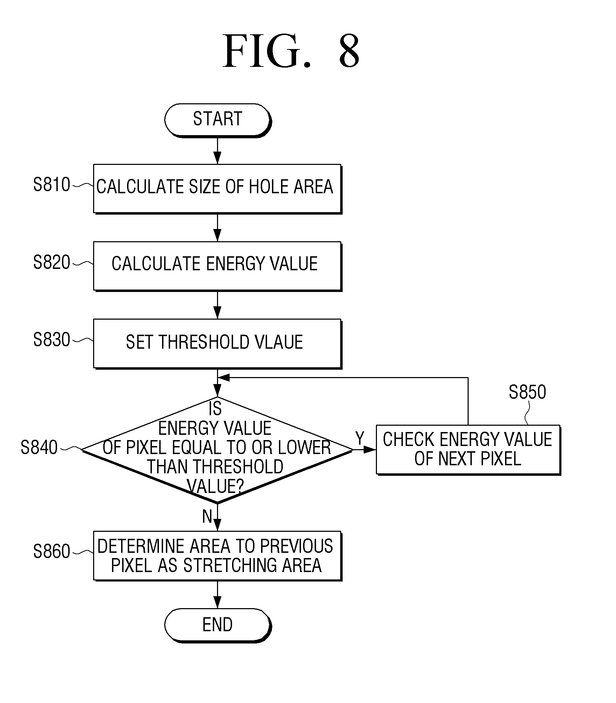

FIG. 8 is a flowchart illustrating a method of determining a stretching area according to an exemplary embodiment of the present general inventive concept. Referring to FIG. 8, in operation S810, a size of a hole size generated by shifting of an object is calculated. Since left and right eyes of a user are arranged side by side in a horizontal direction based on the surface of the earth, left and right eye images for forming a 3D image has a disparity in the horizontal direction. Therefore, a width of the hole area in the horizontal area is calculated and used.

If the width of the hole area is calculated, an energy value of a background area around the hole area is calculated in operation S820. In operation S830, an average value of the calculated energy values is calculated to set a threshold value . In this case, a whole  part of the background area is not used, and only energy values of pixels in a part of the background area of a size corresponding to the width of the hole area may be used.

In this state, the energy values of pixels of the background area are compared with the threshold value from a boundary of the hole area in operation S840. If the energy values are equal to or lower than the threshold value according to the comparison result, an energy value of a next pixel is checked and compared with the threshold value in operation S850. This operation is performed sequentially with respect to all pixels of the back ground area having the same size as the width of the hole area.

If the energy values exceed the threshold value according to the comparison result, a stretching area is determined from a previous pixel to the boundary of the hole area in operation S860.

Therefore, a pixel value of the stretching area is inserted into the hole area to fill the hole area with the pixel value.

Since the energy value is used, if a pattern is formed in the background area or a boundary of an adjacent object is formed in the background area, the hole area may be filled. Therefore, an image quality deterioration phenomenon may be prevented.

After the hole area of the target image is filled, smoothing processing may be performed with respect to the boundary of the hole area by using a smoothing filter.

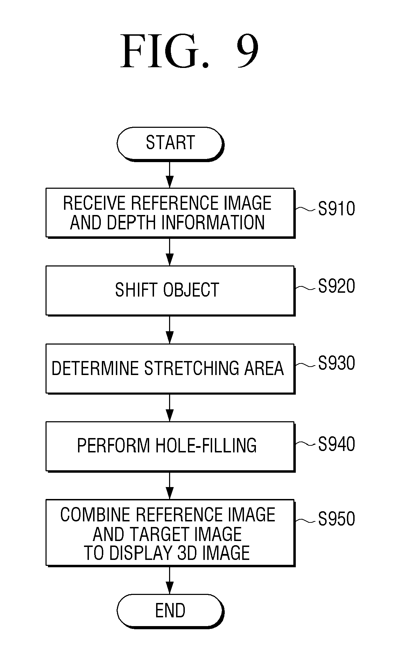

FIG. 9 is a flowchart illustrating a method of displaying a 3D image according to an exemplary embodiment of the present general inventive concept. Referring to FIG.9, in operation S910, a display apparatus receives a reference image and depth information. The reference image and the depth information may be received from a content provider.

In detail, the reference image and the depth information may be received in a transmission stream from a broadcasting station, a web server, or the like.

The display apparatus performs processing, such as demodulating, equalizing, decoding, demultiplexing, etc., with respect to the received transmission stream to detect the reference image and the depth information. This detailed processing operation is well-known, and thus an illustration and a description thereof will be omitted.

In operation S920, the display apparatus shifts an object of the reference image by using the depth information. In operation S930, the display apparatus calculates an energy value and compares the energy value with a threshold value to determine a stretching area. In operation S940, the display apparatus inserts a pixel of the stretching area into a hole area generated by shifting of the object to form a target image.

In operation S950, the display apparatus combines the reference image and the target image to display a 3D image.

The method of FIG. 9 may be performed by an image processing device or a display apparatus having the same structure as that described with reference to FIG. 5. Detailed descriptions of operations of the method of FIG. 9 are the same as those described in the above exemplary embodiments and will be omitted.

According to various exemplary embodiments as described above, a target image having no image quality deterioration is generated from a reference image to display a 3D image.

A program for executing methods according to the above-described exemplary embodiments of the present general inventive concept may be stored and used on various types of recording media.

In detail, a code for performing the above-described methods may be stored on various types of computer-readable recording media such as a Random Access Memory (RAM), a flash memory, a Read Only Memory (ROM), an Erasable Programmable ROM (EPROM), an Electronically Erasable and Programmable ROM (EEPROM), a register, a hard disc, a removable disc, a memory card, a USB memory, a CD-ROM, etc.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. An image processing method comprising:

shifting an object displayed in a reference image according to depth information;
determining a stretching area of a variable size by using an energy value of a background area of the shifted object; and
generating a target image by inserting a pixel of the stretching area into a hole area generated by shifting the object.

2. The image processing method of claim 1, wherein the determining of the stretching area comprises:

calculating a size of the hole area;
calculating an energy value of the background area by the calculated size from a boundary of the hole area; and
calculating an area of the background area having an energy value equal to or lower than a threshold value as the stretching area.

3. The image processing method of claim 2, wherein the stretching area is an area which comprises pixels that ranges from the boundary of the hole area to a pixel before a pixel exceeding the threshold value.

4. The image processing method of claim 3, wherein the threshold value is an average energy value calculated by Equation below:

$$\xi = \frac{1}{\lambda} \sum_{i=1}^{\lambda} E_i$$

wherein $\xi$ denotes the average energy value, $\lambda$ denotes a width of the hole area, and $E_i$ denotes an energy value of an $i_{th}$ pixel.

5. The image processing method of claim 4, wherein the energy value is calculated by using one of Equations below:

$$E(x, y) = \left| \frac{\partial}{\partial x} I(x, y) \right| + \left| \frac{\partial}{\partial y} I(x, y) \right|$$

$$E(x, y) = \sqrt{\left( \frac{\partial}{\partial x} I(x, y) \right)^2 + \left( \frac{\partial}{\partial y} I(x, y) \right)^2}$$

$$E(x, y) = \sqrt{\left( \frac{\partial}{\partial x} |I(x, y)| \right)^2 + \left( \frac{\partial}{\partial y} |I(x, y)| \right)^2}$$

wherein E(x,y) denotes an energy value of a pixel in coordinate (x,y), and I(x,y) denotes a linear combination of R, G, and B components of the image.

6. The image processing method of claim 5, wherein the linear combination I(x,y) is calculated by Equation below:

$$I(x, y) = \omega_R R(x, y) + \omega_G G(x, y) + \omega_B B(x, y)$$

wherein R(x,y), G(x,y), and B(x,y) denote R, G, and B values of the pixel positioned in the coordinate (x,y), and $\omega_R$, $\omega_G$, and $\omega_B$ respectively denote weights of the R, G, and B values.

7. The image processing method of any one of claims 1 through 6, further comprising:

smoothing a boundary between an object existing in an original position on the target image and the background area.

8. A display method comprising:

receiving a reference image and depth information;
shifting an object displayed in the reference image according to the depth information;
determining a stretching area of a variable size from the background area by using an energy value of the background area of the shifted object;
generating a target image by inserting a pixel of the stretching area into a hole area generated by shifting the object; and
combining the reference image and the target image to display a 3-dimenstional (3D) image.

9. The image processing method of claim 8, wherein the determining of the stretching area comprises:

calculating a size of the hole area;
calculating an energy value of the background area by the calculated size from a boundary of the hole area; and
calculating an area of the background area having an energy value equal to or lower than a threshold value as the stretching area,
wherein the stretching area is an area which comprises pixels that ranges from the boundary of the hole area to a pixel before a pixel exceeding the threshold value.

10. An image processing device comprising:

a receiver which receives a reference image and depth information;
a controller which determines a stretching area of a variable size by using an energy value of a background of an object displayed in the reference image; and
an image processor which shifts the object displayed in the reference image according to the depth information and inserts a pixel of the stretching area into a hole area generated by shifting the object to generate a target image.

11. The image processing device of claim 10, wherein the controller calculates a size of the hole area and calculates an energy value of the background area by the calculated size from a boundary of the hole area to determine an area of the background area having an energy value equal to or lower than a threshold value as the stretching area, wherein the stretching area is an area which comprises pixels that ranges from the boundary of the hole area to a pixel before a pixel exceeding the threshold value.

12. The image processing device of claim 11, wherein the threshold value is an average energy value calculated by Equation below:

$$\xi = \frac{1}{\lambda} \sum_{i=1}^{\lambda} E_i$$

wherein $\xi$ denotes the average energy value, $\lambda$ denotes a width of the hole area, and $E_i$ denotes an energy value of an $i_{th}$ pixel.

13. The image processing device of any one of claims 10 through 12, wherein the image processor smoothes a boundary between an object existing in an original position on the target image and the background area.

14. The image processing device of any one of claims 11 through 13, further comprising:

   a display device which combines the reference image and the target image to display a 3D image.

15. The image processing device of any one of claims 11 through 13, further comprising:

   an interface which transmits the reference image and the target image to a display apparatus.

# FIG. 1

100

110 — RECEIVER → IMAGE PROCESSOR — 130

CONTROLLER — 120

# FIG. 2

# FIG. 3

# FIG. 4

Input:
2D image + depth map — 10, 20

Projection

Intermediate result:
Target view with holes
Target depth map — 12, 30, 40

Hole-filling

Output:
Target view without holes — 60

Image energy — 50

EP 2 648 162 A2

# FIG. 5

100

110          130          140

| RECEIVER | | IMAGE PROCESSOR | | DISPLAY DEVICE |

120

| CONTROLLER |

# FIG. 6

# FIG. 7

START

SHIFT OBJECT OF
REFERENCE IMAGE — S710

DETERMINE STRETCHING AREA
BY USING ENERGY VALUE — S720

PERFORM HOLE-FILLING
TO GENERATE TARGET IMAGE — S730

END

# FIG. 8

START

S810 — CALCULATE SIZE OF HOLE AREA

S820 — CALCULATE ENERGY VALUE

S830 — SET THRESHOLD VLAUE

S840 — IS ENERGY VALUE OF PIXEL EQUAL TO OR LOWER THAN THRESHOLD VALUE?

Y → CHECK ENERGY VALUE OF NEXT PIXEL — S850

N

S860 — DETERMINE AREA TO PREVIOUS PIXEL AS STRETCHING AREA

END

# FIG. 9

```
        ┌─────────────┐
        │    START    │
        └──────┬──────┘
               │
               ▼
  ┌──────────────────────────┐
  │  RECEIVE REFERENCE IMAGE │ ～S910
  │   AND DEPTH INFORMATION  │
  └────────────┬─────────────┘
               │
               ▼
  ┌──────────────────────────┐
  │       SHIFT OBJECT       │ ～S920
  └────────────┬─────────────┘
               │
               ▼
  ┌──────────────────────────┐
  │ DETERMINE STRETCHING AREA│ ～S930
  └────────────┬─────────────┘
               │
               ▼
  ┌──────────────────────────┐
  │   PERFORM HOLE-FILLING   │ ～S940
  └────────────┬─────────────┘
               │
               ▼
  ┌──────────────────────────┐
  │ COMBINE REFERENCE IMAGE  │ ～S950
  │    AND TARGET IMAGE      │
  │   TO DISPLAY 3D IMAGE    │
  └────────────┬─────────────┘
               │
               ▼
        ┌─────────────┐
        │     END     │
        └─────────────┘
```

**EP 2 648 162 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110120489